# FASCICULE DE BREVET EUROPEEN

(11) **EP 3 339 169 B1**
(45) Date de publication et mention de la délivrance du brevet: **07.08.2019**
(21) Numéro de dépôt: 17210423.4
(22) Date de dépôt: 22.12.2017
(51) Int. Cl.: B64C 25/36, B64C 25/44

(54) **ATTERRISSEUR D'AERONEF EQUIPE D'UNE ROUE FREINEE**
FAHRWERK EINES LUFTFAHRZEUGS, DAS MIT EINEM GEBREMSTEN RAD AUSGESTATTET IST
AIRCRAFT LANDING GEAR PROVIDED WITH A BRAKED WHEEL

(30) Priorité: 23.12.2016 FR 1663335
(43) Date de publication de la demande: 27.06.2018
(73) Titulaire: Safran Landing Systems, 78140 Vélizy-Villacoublay (FR)
(72) Inventeur: DAFFOS, Mathieu, 78140 Velizy-Villacoublay (FR); DARRAILLANS, Nicolas, 78140 Velizy-Villacoublay (FR)
(74) Mandataire: Lavialle, Bruno François Stéphane

(56) Documents cités:
- FR-A1- 3 026 717
- US-A- 3 977 631
- US-A1- 2013 327 884

## Description

L'invention concerne un atterrisseur muni d'un dispositif d'entraînement en rotation d'une roue freinée portée par l'atterrisseur.

### ARRIERE PLAN DE L'INVENTION

On connaît du document FR 3 026 717 un atterrisseur d'aéronef muni de roues freinées associés à des dispositifs d'entraînement en rotation, de sorte que l'aéronef puisse être déplacé au sol sans recourir aux propulseurs de l'aéronef. Chaque dispositif d'entraînement comprend un actionneur d'entraînement comportant un moteur électrique accouplé de manière sélective à la roue par un organe d'accouplement (ou de transmission) s'étendant entre l'essieu qui porte la roue et le tube de torsion du frein sur lequel sont montés les disques de freins. L'organe d'accouplement comprend notamment un arbre d'entraînement tubulaire qui s'étend autour de l'essieu en étant guidé en rotation sur ce dernier par des roulements à aiguilles. L'arbre d'entraînement tubulaire passe sous le pied du porte-actionneurs qui porte les actionneurs de freinage, de sorte que le porte-actionneurs n'est pas centré directement sur l'essieu mais sur l'arbre d'entraînement, via des roulements à aiguilles.

Cette disposition implique que les efforts radiaux causés par le freinage et transmis par le porte-actionneurs vers l'essieu transitent par l'arbre d'entraînement tubulaire et ses roulements, ce qui peut conduire à une fatigue accélérée de ces éléments.

### OBJET DE L'INVENTION

L'invention vise à proposer un nouvel agencement évitant que les efforts radiaux de freinage ne transitent par l'arbre d'entraînement de l'organe de transmission.

### PRESENTATION DE L'INVENTION

En vue de la réalisation de ce but, on propose un atterrisseur d'aéronef comportant au moins :
- un essieu porté en partie basse de l'atterrisseur ;
- une roue munie d'une jante montée sur l'essieu de l'atterrisseur via des roulements pour tourner autour d'un axe de rotation ;
- un frein enfilé sur l'essieu et comportant un tube de torsion s'étendant autour de l'essieu, des organes de friction montés autour du tube de torsion et qui s'étendent entre le tube de torsion et la jante de la roue, et au moins un actionneur de freinage destiné à exercer sélectivement un effort de freinage sur les organes de friction, l'actionneur de freinage étant porté par un porte-actionneurs auquel le tube de torsion est solidarisé ;
- des moyens d'entraînement en rotation de la roue comportant d'une part un actionneur d'entraînement en rotation de la roue et d'autre part un organe de transmission pour transmettre sélectivement un mouvement de rotation de l'actionneur de rotation à la jante de la roue et qui s'étend entre l'essieu et le tube de torsion. Selon l'invention, le porte-actionneurs est centré directement par l'essieu et l'organe de transmission est porté par le frein et guidé en rotation sur celui-ci par des roulements.

Ainsi, les efforts radiaux de freinage sont directement transmis à l'essieu sans transiter par l'organe de transmission, qui ne subit donc pas les efforts de freinage.

Par « centré directement », on entend que le porte-actionneurs est enfilé sur l'essieu avec interposition éventuelle de bagues en bronze ou de chemises protectrices, mais sans interposition de roulements d'aucune sorte.

L'actionneur d'entraînement en rotation peut être également porté par le porte-actionneurs, ou par une autre partie de l'atterrisseur. Il est de préférence muni d'un pignon de sortie pour engrener avec une couronne dentée d'un arbre d'entraînement tubulaire de l'organe de transmission.

Selon une disposition particulière de l'invention, l'organe de transmission comporte un organe de liaison sélective muni d'un barillet guidé en rotation sur le frein et muni de poussoirs pour pousser sélectivement des disques d'un embrayage reliant le barillet à la jante de la roue.

De préférence alors, les poussoirs du barillet sont eux-mêmes poussés via une butée à billes par des actionneurs de liaison portés par le frein et qui s'étendent à l'intérieur de l'arbre d'entraînement.

### DESCRIPTION DES FIGURES

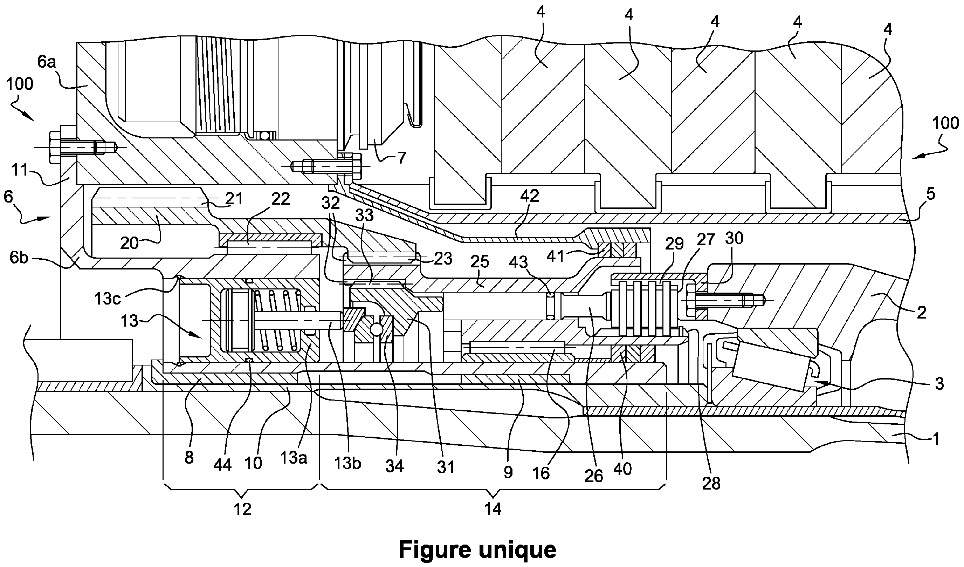

L'invention sera mieux comprise à la lumière de la description qui suit d'un mode particulier de réalisation de l'invention, en référence à l'unique figure qui est une coupe selon un plan passant par l'axe de rotation d'une roue d'aéronef de la partie de l'atterrisseur qui porte la roue, et équipé du dispositif d'entraînement en rotation selon l'invention.

### DESCRIPTION DETAILLLEE DE L'INVENTION

Sur la figure, on reconnaît un essieu 1 porté en partie basse d'un atterrisseur d'aéronef pour recevoir à rotation une roue comportant une jante dont on aperçoit ici l'extrémité du moyeu 2, ainsi que l'un des roulements à rouleaux coniques 3 qui guide la roue en rotation sur l'essieu 1 selon un axe de rotation.

La roue est équipée d'un frein 100 dont on distingue les organes de friction 4, ici des disques en carbone qui sont enfilés sur un tube de torsion 5 qui est relié à un porte-actionneurs 6 en deux parties, à savoir une couronne 6a qui reçoit les actionneurs de freinage 7 et sur laquelle le tube de torsion 5 est vissé, et un socle 6b directement enfilé sur l'essieu 1 en étant centré sur ce dernier via des douilles en bronze 8,9 qui sont enfilées sur un chemise protectrice 10, elle-même enfilée sur l'essieu pour protéger ce dernier. Le socle 6b comporte un plateau 11 sur lequel la couronne 6a est centrée et vissée. Le plateau 11 est relié à un corps 12 comportant des cavités cylindriques percées selon des axes parallèles à l'axe de rotation de la roue pour recevoir des actionneurs de liaison 13, ici des actionneurs hydrauliques comportant un corps tubulaire 13a duquel saille une tige 13b associée à un piston qui coulisse à étanchéité dans le corps tubulaire 13a pour former un vérin. Chacun des actionneurs de liaison 13 est arrêté axialement par un jonc 13c. Le corps 12 se prolonge par un manchon 14 qui s'étend jusqu'au roulement à rouleaux coniques 3 de la roue.

L'atterrisseur est équipé d'un dispositif d'entraînement en rotation de la roue par l'extrémité de son moyeu 2, dont l'organe d'accouplement entre l'actionneur d'entraînement et le moyeu s'étend comme dans le document FR 3 026 717 entre l'essieu 1 et le tube de torsion 5 du frein 100.

Plus précisément, le dispositif d'entraînement en rotation comporte au moins un actionneur d'entraînement (non représenté ici, et porté par exemple par la couronne ou toute autre partie du frein ou de l'atterrisseur), comportant un moteur électrique entraînant un pignon. Le dispositif d'entraînement en rotation comporte par ailleurs un organe d'accouplement porté par le frein 100, et qui comporte ici un arbre d'entraînement tubulaire 20 qui s'étend autour du corps 12 du socle 6b. L'arbre d'entraînement tubulaire 20 comporte à l'une de ses extrémités une couronne dentée 21 pour son entraînement en rotation par le pignon de l'actionneur d'entraînement. L'arbre d'entraînement tubulaire 20 est guidé en rotation par un roulement à aiguilles 22 s'étendant ici entre le corps 12 du socle 6b et l'arbre d'entraînement tubulaire 20. L'arbre d'entraînement tubulaire 20 se termine à son autre extrémité par des cannelures 23 qui coopèrent avec des cannelures homologues d'un barillet 25 qui est monté à rotation sur le manchon 14 du socle 6b, via un roulement à aiguilles 16. Les cannelures 23 sont bombées, pour autoriser un déversement angulaire entre l'arbre d'entraînement tubulaire 20 et le barillet 25. Le barillet 25 comporte une pluralité de cavités parallèles recevant des poussoirs 26 qui appuient sélectivement sur des disques 27 d'un embrayage disposé entre des barrettes 28 formées sur l'extrémité du barillet 25 et des barrettes 29 formées sur la surface interne d'une cloche 30 rapportée sur l'extrémité du moyeu 2 pour venir coiffer les disques d'embrayage 27 quand la roue est mise en place sur l'essieu. L'ensemble forme l'organe d'accouplement du dispositif d'entraînement en rotation.

Quand les poussoirs 26 pressent les disques 27, le moyeu 2 est solidarisé en rotation au barillet 25, qui est lui-même entraîné en rotation par l'actionneur d'entraînement via l'arbre d'entraînement tubulaire 20.

Les poussoirs 26 sont eux-mêmes poussés par un piston annulaire 31 qui est astreint à coulisser axialement dans le barillet 25 par des cannelures 32,33 homologues du piston annulaire 31 et du barillet 25 bloquant toute rotation du piston 31 par rapport au barillet 25. Le piston annulaire 31 est lui-même poussé par les tiges 13b des actionneurs de liaison 13 via une butée à billes 34 interposée entre les tiges 13b et le piston annulaire 31, pour permettre de transmettre la poussée des tiges 13b des actionneurs de liaison 13 qui ne tournent pas, au piston annulaire 31 qui tourne avec le barillet 25.

Ainsi, un actionnement des actionneurs de liaison 13 provoque une poussée par les tiges 13b sur la butée à billes 34, qui pousse le piston annulaire 31, qui pousse les poussoirs 26, qui pressent les disques 27 entre eux pour solidariser en rotation le barillet 25 au moyeu 2 de la roue. On remarquera que les actionneurs de liaison 13 s'étendent à l'intérieur de l'arbre d'entraînement tubulaire 20, contrairement à la disposition illustrée dans le document FR 3 026 717.

L'espace entre la couronne 6a et le socle 6b est rendu étanche par la disposition :
- de joints d'étanchéité 40 entre le barillet 25 et le manchon 14 du socle 6b;
- de joints d'étanchéité 41 entre le barillet 25 et l'extrémité d'un carter 42 vissé à la couronne 6a et s'étendant entre le tube de torsion 5 et le barillet 25;
- de joints d'étanchéité toriques 43 rendant étanche le coulissement des poussoirs 26 dans les cavités du barillet 25.
- De joints d'étanchéité toriques 44 s'étendant entre le corps 13a des actionneurs et la cavité de la partie massive 12 du socle 6b qui le reçoit.

Ces joints d'étanchéité empêchent la pollution externe, notamment la poussière de carbone, de venir polluer les roulements à aiguilles, les liaisons glissantes à cannelures et les engrènements entre le pignon de l'actionneur d'entraînement et la couronne dentée 21.

On remarquera que le porte-actionneurs est monté directement sur l'essieu (via les douilles en bronze 8,9 et la chemise de protection 10), et donc que les efforts radiaux de freinage transitent directement vers l'essieu sans solliciter l'arbre d'entraînement tubulaire 20, le barillet 25, ou les roulements à aiguilles 22, 16.

On remarquera également que la roue peut être démontée de l'essieu sans toucher au frein 100 et au dispositif d'entraînement en rotation. On peut de même changer facilement les disques de frein 4 une fois la roue enlevée, puisque l'organe d'accouplement du dispositif d'entraînement en rotation s'étend entre le tube de torsion et l'essieu et est donc à l'abri.

L'invention n'est pas limitée à ce qui vient d'être décrit, mais englobe au contraire toute variante entrant dans le cadre défini par les revendications.

En particulier bien qu'ici le porte-actionneurs soit en deux parties (couronne 6a et socle 6b), ce qui permet l'extraction de la couronne 6a sans avoir à démonter le socle ni l'organe de transmission lorsque le socle est en place sur l'essieu, on pourra réaliser le porte-actionneurs en un seul tenant.

## Revendications

1. Atterrisseur d'aéronef comportant au moins :
- un essieu (1) porté en partie basse de l'atterrisseur ;
- une roue munie d'une jante (2) montée sur l'essieu de l'atterrisseur via des roulements (3) pour tourner autour d'un axe de rotation ;
- un frein (100) enfilé sur l'essieu et comportant un tube de torsion (5) s'étendant autour de l'essieu, des organes de friction (4) montés autour du tube de torsion et qui s'étendent entre le tube de torsion et la jante de la roue, et au moins un actionneur de freinage (7) destiné à exercer sélectivement un effort de freinage sur les organes de friction, l'actionneur de freinage étant porté par un porte-actionneurs (6a,6b) auquel le tube de torsion est solidarisé ;
- des moyens d'entraînement en rotation de la roue comportant d'une part un actionneur d'entraînement en rotation de la roue et d'autre part un organe de transmission (20,25,27) pour transmettre sélectivement un mouvement de rotation de l' actionneur de rotation à la jante de la roue qui s'étend entre l'essieu et le tube de torsion ;
**caractérisé en ce que** le porte-actionneurs (6a, 6b) est centré directement par l'essieu (1) et l'organe de transmission (20, 25, 27) est porté par le frein (100) et guidé en rotation sur celui-ci par des roulements (22, 16).

2. Atterrisseur selon la revendication 1, dans lequel l'organe de transmission comporte un arbre d'entraînement tubulaire (20) qui entraîne en rotation un barillet (25) recevant des poussoirs (26) aptes à appuyer sélectivement sur des disques de friction (27) d'un embrayage disposé entre le barillet et la jante de la roue, l'arbre d'entraînement tubulaire et le barillet étant portés et guidés en rotation par le porte-actionneurs du frein.

3. Atterrisseur selon la revendication 2, dans lequel les poussoirs du barillet sont eux-mêmes poussés par un piston annulaire (31) astreint à coulisser axialement dans le barillet.

4. Atterrisseur selon la revendication 3, dans lequel le poussoir annulaire est lui-même poussé via une butée à billes (34) par des actionneurs de liaison (13) disposés dans un corps (12) du porte-actionneurs autour duquel s'étend l'arbre d'entraînement tubulaire (12).

5. Atterrisseur selon la revendication 3, dans lequel l'arbre d'entraînement (20) et le barillet (25) coopèrent en rotation par des cannelures bombées (23).

6. Atterrisseur selon la revendication 1, dans lequel le porte-actionneurs comprend un socle (6a) centré sur l'essieu et portant l'organe de transmission, et d'autre part une couronne (6b) rapportée de façon amovible sur le socle et pouvant être retirée du socle alors que celui-ci est en place sur l'essieu.

## Patentansprüche

1. Luftfahrzeugfahrwerk, mindestens umfassend:
- eine Radachse (1), die im unteren Teil des Fahrwerks getragen wird;
- ein mit einer Felge (2) versehenes Rad, das auf der Radachse des Fahrwerks über Wälzlager (3) gelagert ist, um sich um eine Rotationsachse zu drehen;
- eine Bremse (100), die auf die Radachse geschoben ist und ein Torsionsrohr (5) umfasst, das sich um die Radachse herum erstreckt, Reibelemente (4), die um das Torsionsrohr herum gelagert sind und sich zwischen dem Torsionsrohr und der Felge des Rades erstrecken, und mindestens einen Bremsaktor (7), der dazu bestimmt ist, selektiv eine Bremskraft auf die Reibelemente auszuüben, wobei der Bremsaktor von einem Aktorträger (6a, 6b) getragen wird, mit dem das Torsionsrohr fest verbunden ist;
- Drehantriebsmittel zum Drehantrieb des Rades, die einerseits einen Drehantriebsaktor zum Drehantrieb des Rades und andererseits ein Übertragungselement (20, 25, 27) umfassen, um selektiv eine Drehbewegung des Drehaktors auf die Felge des Rades zu übertragen, die sich zwischen der Radachse und dem Torsionsrohr erstreckt;
**dadurch gekennzeichnet, dass** der Aktorträger (6a, 6b) direkt durch die Radachse (1) zentriert ist und das Übertragungselement (20, 25, 27) von der Bremse (100) getragen und auf derselben durch Wälzlager (22, 16) in Drehung geführt wird.

2. Fahrwerk nach Anspruch 1, bei dem das Übertragungselement eine rohrförmige Antriebswelle (20) umfasst, die eine Trommel (25), die Stößel (26) aufnimmt, in Drehung antreibt, wobei die Stößel geeignet sind, selektiv auf Reibscheiben (27) einer Kupplung zu drücken, die zwischen der Trommel und der Felge des Rades angeordnet ist, wobei die rohrförmige Antriebswelle und die Trommel von dem Aktorträger der Bremse getragen und in Drehung geführt werden.

3. Fahrwerk nach Anspruch 2, bei dem die Stößel der Trommel selbst von einem ringförmigen Kolben (31) gestoßen werden, der gezwungen wird, axial in der Trommel zu gleiten.

4. Fahrwerk nach Anspruch 3, bei dem der ringförmige Stößel selbst über ein Axialkugellager (34) von Verbindungsaktoren (13) gestoßen wird, die in einem Körper (12) des Aktorträgers angeordnet sind, um den sich die rohrförmige Antriebswelle (12) erstreckt.

5. Fahrwerk nach Anspruch 3, bei dem die Antriebswelle (20) und die Trommel (25) über eine konvexe Riffelung (23) in Drehung zusammenwirken.

6. Fahrwerk nach Anspruch 1, bei dem der Aktorträger einen Sockel (6a) umfasst, der auf der Radachse zentriert ist und das Übertragungselement trägt, und andererseits einen Kranz (6b), der auf lösbare Weise an dem Sockel befestigt ist und von dem Sockel weggezogen werden kann, während dieser auf der Radachse am Platz ist.

## Claims

1. Aircraft landing gear including at least:
- an axle (1) carried in the bottom portion of the landing gear;
- a wheel provided with a rim (2) mounted on the axle of the landing gear via bearings (3) in order to rotate about an axis of rotation;
- a brake (100) threaded on the axle and including a torque tube (5) extending around the axle, friction members (4) mounted around the torque tube and extending between the torque tube and the rim of the wheel, and at least one brake actuator (7) configured for selectively exerting a braking force on the friction members, the brake actuator being carried by an actuator-carrier (6a,6b) to which the torque tube is secured;
- a rotary drive configured to drive the wheel in rotation including firstly an actuator for driving the wheel in rotation and secondly a transmission member (20,25,27) for selectively transmitting movement in rotation from the rotation actuator to the rim of the wheel and extending between the axle and the torque tube;
**characterised in that** the actuator-carrier (6a,6b) is centred directly by the axle (1) and the transmission member (20,25,27) is carried by the brake (100) and guided in rotation thereon by bearings (22,16).

2. Landing gear according to claim 1, wherein the transmission member includes a tubular drive shaft (20) that rotates a cylinder (25) receiving push-rods (26) adapted to press selectively on friction disks (27) of a clutch arranged between the cylinder and the rim of the wheel, the tubular drive shaft and the cylinder being carried and guided in rotation by the actuator-carrier of the brake.

3. Landing gear according to claim 2, wherein the push-rods of the cylinder are themselves pushed by an annular piston (31) that is constrained to slide axially in the cylinder.

4. Landing gear according to claim 3, wherein the annular piston is itself pushed via a ball thrust bearing (34) by connection actuators (13) arranged in a body (12) of the actuator-carrier around which the tubular drive shaft (12) extends.

5. Landing gear according to claim 3, wherein the drive shaft (20) and the cylinder (25) co-operate in rotation via convex splines (23).

6. Landing gear according to claim 1, wherein the actuator-carrier includes a mount (6a) centred on the axle and carrying the transmission member, and secondly a ring gear (6b) fastened in removable manner to the mount and being able to be removed from the mount while the latter is in place on the axle.
